(19) Europäisches Patentamt
European Patent Office
Office européen des brevets

(11) EP 0 784 062 A2

(12) # EUROPEAN PATENT APPLICATION

(43) Date of publication:
16.07.1997 Bulletin 1997/29

(51) Int. Cl.[6]: **C08F 10/02**, C08F 4/642, C08F 2/34, B32B 27/32

(21) Application number: 96309147.5

(22) Date of filing: 13.12.1996

(84) Designated Contracting States:
AT BE DE ES FR GB GR IT NL PT SE

(30) Priority: 15.12.1995 US 8767
01.10.1996 US 724443

(71) Applicant: UNION CARBIDE CHEMICALS & PLASTICS TECHNOLOGY CORPORATION
Danbury, Connecticut 06817-0001 (US)

(72) Inventors:
- Karol, Frederick John
Belle Mead, New Jersey 08502 (US)
- Lynn, Timothy Roger
Hackettstown, New Jersey 07840 (US)
- Reichle, Walter Thomas
Warren, New Jersey 07590 (US)
- Wasserman, Eric Paul
Hopewell, New Jersey 08525 (US)

(74) Representative: Allard, Susan Joyce et al
BOULT WADE TENNANT,
27 Furnival Street
London EC4A 1PQ (GB)

(54) **Process for production of long-chain branched polyolefins**

(57) A process for making a polyethylene having long chain branching by providing ethylene and optionally an alpha olefin having 3 to 18 carbon atoms in a reaction zone containing a metallocene polymerization catalyst under polymerization conditions in the presence of a hydrocarbon interlinking compound in an amount sufficient to provide chain entanglement or long chain branching.

EP 0 784 062 A2

Printed by Rank Xerox (UK) Business Services
2.14.11/3.4

## Description

### Field

This invention relates to the polymerization of polyolefins, particularly polyolefins having long-chain branching (LCB), most particularly polyethylenes.

### Background

U.S. Patent No. 5,317,036 discloses gas phase polymerization processes which utilize unsupported catalysts, such as. for example, transition metal coordination catalysts. The catalysts are introduced into a reactor, such as a fluidized bed, in the form of a liquid such as in a solution. The patent further discloses the use of dienes as comonomers to produce polyolefins such as ethylene-propylene-diene elastomers.

Although it is known to use a diene as a comonomer in polyolefin polymerization or to activate a Ziegler type catalyst (U.S. Patent No. 5,021,382), it is not known to use small amounts of a polyene such as a diene, conjugated or non-conjugated, a triene, naphthenics (e.g., cyclopentadiene) or other hydrocarbon interlinking compounds which have two or more carbon-carbon double bonds or are ring strained with at least one additional double bond to increase or enhance long-chain branching of a polyolefin during polymerization.

Surprisingly, it has been found in the present invention that polyethylene polymers having long chain branching can be polymerized in a reaction zone containing a metallocene polymerization catalyst in the presence of a hydrocarbon interlinking compound. Further, the polyethylene product has enhanced processability and improved extrudability, toughness, strength and environmental stress cracking resistance.

### SUMMARY OF THE INVENTION

In accordance with the invention, there is provided a process for making an ethylene homopolymer, copolymer or terpolymer having long chain branching comprising providing ethylene and optionally at least one alpha olefin having 3 to 18 carbon atoms in a reaction zone containing a metallocene polymerization catalyst under polymerization conditions in the presence of a hydrocarbon interlinking compound in an amount sufficient to provide a polyethylene polymer having chain entanglement.

In one embodiment of the invention, there is provided a process for producing a polyethylene having long-chain branching comprising contacting ethylene and optionally at least one $C_3$ to $C_8$ alpha olefin in a reaction zone under polymerization conditions in the presence a hydrocarbon interlinking compound in an amount sufficient to provide chain entanglement and a metallocene catalyst comprising a

(i) a catalyst precursor having

Formula I:

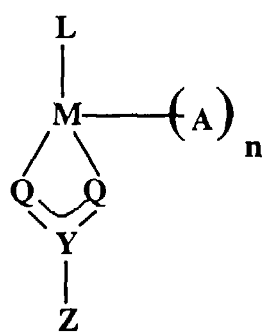

wherein:

M is a transition metal, preferably Zr or Hf;
L is a substituted or unsubstituted, $^1$-bonded ligand coordinated to M, preferably a cyclopentadienyl ligand;
Q can be the same or different and is independently selected from the group consisting of -O-, -NR-, $-CR_2$- and -S-;

Y is either C or S;

Z is selected from the group consisting of -OR, $-NR_2$, - $CR_3$, -SR, $-SiR_3$, $-PR_2$ and -H, with the proviso that when Q is -NR-then Z is selected from the group consisting of -OR, $-NR_2$, -SR, $-SiR_3$, - $PR_2$ and -H;

n is 1 or 2;

A is a univalent anionic group when n is 2 or A is a divalent anionic group when n is 1; and

R can be the same or different and is independently a group containing carbon, silicon, nitrogen, oxygen, and/or phosphorus where one or more R groups may be attached to the L substituent, preferably R is a hydrocarbon group containing from 1 to 20 carbon atoms, most preferably an alkyl, cycloalkyl or an aryl group; or

Formula II:

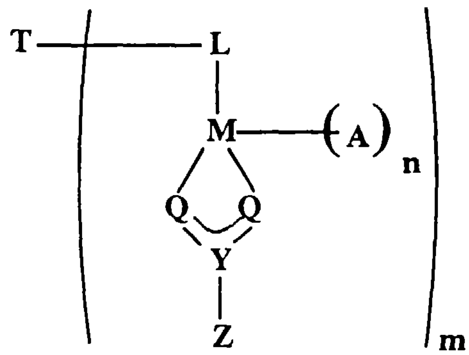

wherein:

M is a transition metal, preferably Zr or Hf;

L is a substituted or unsubstituted, [1]-bonded ligand coordinated to M, preferably a cyclopentadienyl ligand;

Q can be the same or different and is independently selected from the group consisting of -O-, -NR-, $-CR_2$- and -S-

Y is either C or S;

Z is selected from the group consisting of -OR, $-NR_2$, - $CR_3$, -SR, $-SiR_3$, $-PR_2$ and -H, with the proviso that when Q is -NR-then Z is selected from the group consisting of-OR, $-NR_2$, -SR, $-SiR_3$, - $PR_2$ and -H;

n is 1 or 2;

A is a univalent anionic group when n is 2 or A is a divalent anionic group when n is 1;

R can be the same or different and is independently a group containing carbon, silicon, nitrogen, oxygen, and/or phosphorus where one or more R groups may be attached to the L substituent, preferably R is a hydrocarbon group containing from 1 to 20 carbon atoms, most preferably an alkyl, cycloalkyl or an aryl group;

T is a bridging group connecting selected from the group consisting of an alkylene or arylene group containing from 1 to 10 carbon atoms optionally substituted with carbon or heteroatoms, germaniun, silicone and alkyl phosphine; and

m is 1 to 7, preferably 2 to 6, most preferably 2 or 3; and

(ii) a co-catalyst.

There are also provided the polymers, particularly polymers comprising ethylene, a hydrocarbon linking compound, and optionally a $C_3$ to $C_8$ alpha olefin (e.g. and hexene-1 or butene-1) produced by the process of the invention.

DETAILED DESCRIPTION OF THE INVENTION

In long chain branching the polymer has branching of sufficient length for chain entanglement, that is the length of a branch is long enough, or contains sufficient carbons, to entangle with other polymer molecules. Generally, long chain branching involves a chain length of at least about 6 carbons usually 10 or more carbons. The long chain branch can be as long as about the same length as the length of the polymer backbone.

The process of the invention is particularly suited for preparing low density ethylene-hexene-1-hydrocarbon interlinking compound terpolymers, low density ethylene-butene-1-hydrocarbon interlinking compound terpolymers, and low density ethylene-hydrocarbon interlinking compound copolymers using a metallocene catalyst. The polymers prepared by the process of the invention have properties similar to high pressure, low density ethylene homopolymer and poly-

ethylene-alpha olefin ($C_3$-$C_{18}$) copolymers.

Catalyst

The practice of this invention is not limited to any particular class or Kind of metallocene catalyst. Any metallocene catalyst useful the conduct of olefin polymerization reactions is suitable for use in the practice of this invention. Metallocene catalysts that have been employed in slurry, solution, bulk, and gas phase polymerizations can be utilized in this invention. In general, these metallocene catalysts will include a metal component and a co-catalyst. The metallocene catalyst can be introduced to the reaction zone on a solid support, in soluble form as a liquid such as a solution or dispersion, sprayed dried, in the form of a prepolymer, or formed in-situ in the reaction zone. Particularly preferred among these is a metallocene catalyst that is spray dried or in soluble form. When the metal component is supported, typical supports can include, for example, silica, carbon black, polyethylene, polycarbonate porous crosslinked polystryene, porous crosslinked polypropylene, alumina, thoria, zirconia, or magnesium halide (e.g., magnesium dichloride) as well as other well known support materials and mixtures thereof. A supported metallocene catalyst composition, i.e.,catalyst precursor and the activating co-catalyst, is impregnated in or deposited on the surface of the inert support substrate such that the catalyst composition is between 1 and 90 percent by weight of the total weight of the catalyst composition and the support.

One type of metallocene polymerization catalyst precursor which can be used in accordance with the invention are metal coordination complexes corresponding to the formula:

(III)

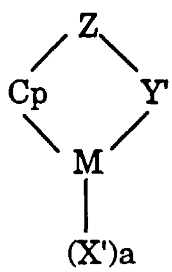

wherein:

M is a metal of Group IIIB to VIII of the Periodic Table of the Elements:
Cp is a cyclopentadienyl or substituted cyclopentadienyl group bound in an $\eta^5$ bonded mode to M;
Z is a moiety comprising boron, or a member of Group IVB of the Periodic Table of the Elements and optionally sulfur or oxygen, the moiety having up to 20 non-hydrogen atoms, and optionally Cp and Z together form a fused ring system;
X' is an anionic ligand group or a neutral Lewis base ligand group having up to 30 non-hydrogen atoms;
a is 0, 1, 2, 3 or 4 depending on the valance of M; and
Y' is an anionic or non-anionic ligand group bonded to Z and M and is nitrogen, phosphorus, oxygen or sulfur having up to 20 non-hydrogen atoms, and optionally Y and Z together form a fused ring system.

Such metal coordination complexes are well known to those skilled in the art and are disclosed in, for example, U.S. Patent Nos. 5,026,798 and 5,055,438 and published European Application No. 0 416 815 A2.

Illustrative but non-limiting examples of the compounds represented by the above formula are:

| Z | Cp | Y | X | M |
|---|---|---|---|---|
| dimethylsilyl | cyclopentadienyl | t-butylamido | chloride | titanium |
| methylphenylsilyl | fluorenyl | phenylamido | methyl | zirconium |
| diphenylsilyl tetramethylethylene | indenyl | cyclohexylamido oxo | | hafnium |
| ethylene | tetramethylcyclopentadienyl | | | |
| diphenylmethylene | | | | |

Typical organometallic co-catalysts other than the aluminoxanes that are suitable for the purposes of the present invention are any of the compounds of the general formula:

$$M^3M^4_vX^2_cR^3_{b-c} \qquad (IV)$$

herein $M^3$ is a metal of Groups IA, IIA and IIIA of the Periodic Table of the Elements; $M^4$ is a metal of Group IA of the Periodic Table of the Elements v is a number from 0 to 1; each $X^2$ is any halogen; c is a number from 0 to 3; each $R^3$ is a monovalent hydrocarbon radical or hydrogen; b is a number from 1 to 4; and wherein b-c is at least 1.

Compounds having only one Group IA, IIA or IIIA metal which are suitable for the practice of the invention include compounds having the formula:

$$M^3R^3_k \qquad (V)$$

wherein:

$M^3$ is a Group IA, IIA or IIIA metal, such as lithium, sodium, beryllium, barium, boron, aluminum, zinc, cadmium, and gallium;
k equals 1, 2 or 3 depending upon the valency of $M^3$ which valency in turn normally depends upon the particular group (i.e., IA, IIA or IIIA) to which $M^3$ belongs; and
each $R^3$ may be any monovalent hydrocarbon radical. Examples of suitable $R^3$ groups include any of the $R^3$ groups aforementioned in connection with formula (V).

Entirely suitable for the purposes of the present invention are the organometallic compounds of Groups IA, IIA, and IIIA, such as methyl and butyllithium, dihexylzinc, butylmagnesium, diethylcadmium, benzylpotassium, diethylzinc, tri-n-butylaluminum, diisobutyl ethylboron, diethylcadmium, di-n-butylzinc and tri-n-amylboron, and, in particular, the aluminum alkyls, such as trihexylaluminum, triethylaluminum, trimethylaluminum, and triisobutylaluminum.

In addition, mono-organohalides and hydrides of Group IIA metals, and mono- or di-organohalides and hydrides of Group IIIA metals conforming to the general formula (VI) are also suitable. Specific examples of such compounds are diisobutylaluminum bromide, isobutylboron dichloride, methyl magnesium chloride, ethylberyllium chloride, ethylcalcium bromide, diisobutylaluminum hydride, methylcadmium hydride, diethylboron hydride, hexylberyllium hydride, dipropylboron hydride, octylmagnesium hydride, butylzinc hydride, dichloroboron hydride, dibromoaluminum hydride and bromocadmium hydride. Such organometallic co-catalyst compounds are well known to those skilled in the art and a more complete discussion of these compounds may be found in U.S. Patent Nos. 3,221,002 and 5,093,415.

In another embodiment of the present invention, the polyethylenes are produced utilizing the catalytically active reaction product of one or more metallocenes with aluminoxane, which is introduced into the gas phase fluidized bed reactor.

The metallocenes are organometallic compounds which are cyclopentadienyl derivatives of a Group IVB, VB, VIB or VIII metal of the Periodic Table and include mono, di and tricyclopentadienyls and their derivatives of the transition metals. Particularly desirable are metallocene complexes of a Group IVB and VB metal such as titanium, zirconium, hafnium and vanadium.

The aluminoxanes are well known in the art and comprise oligomeric linear and/or cyclic alkyl aluminoxanes represented by the formula:

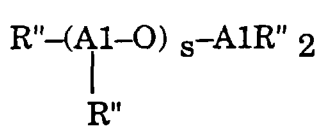

(VI)

for oligomeric, linear aluminoxanes; and

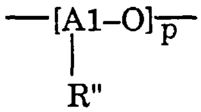

(VII)

for oligomeric, cyclic aluminoxane;
wherein s is 1-40, preferably 10-20; p is 3-40, preferably 3-20; and R" is a $C_1$-$C_{12}$ alkyl group, preferably methyl and an aryl radical such as a substituted or unsubstituted phenyl or naphthyl radical.

Generally, in the preparation of aluminoxanes from, for example, aluminum trimethyl and water, a mixture of linear and cyclic compounds is obtained.

The aluminoxanes may be prepared in a variety of ways. For example, the aluminum alkyl may be treated with water in the form of a moist solvent. Alternatively, the aluminum alkyl, such as aluminum trimethyl may be contacted with a hydrated salt such as hydrated ferrous sulfate. This latter method comprises treating a dilute solution of aluminium trimethyl in, for example, toluene with a suspension of ferrous sulfate heptahydrate. It is also possible to form methylaluminoxanes by the reaction of a tetraalkyldialuminoxane containing $C_2$ or higher alkyl groups with trimethylaluminum using an amount of trimethylaluminum which is less than a stoichiometric excess. The synthesis of methylaluminoxanes may also be achieved by the reaction of a trialkylaluminum compound or a tetraalkyldialuminoxane containing $C_2$ or higher alkyl groups with water to form a polyalkyl aluminoxane which is then reacted with trimethylaluminum. Further, methylaluminoxanes, which are also known as modified aluminoxanes, may be synthesized by the reaction of a polyalkyl aluminoxane containing $C_2$ or higher alkyl groups with trimethylaluminum and then with water as disclosed in, for example, U.S. Patent No. 5,041,584.

Another metallocene useful in the process of the invention may be represented by the general formula:

$$(C_5R_x)_yR'_z(C_5R_m)MQ_{n-y-1} \qquad (VIII)$$

wherein:

M is a metal of Groups IIIB to VIII of the Periodic Table of the Elements;
$(C_5R_x)$ and $(C_5R_m)$ are the same or different cyclopentadienyl or substituted cyclopentadienyl groups bonded to M;
R is the same or different and is hydrogen or a hydrocarbyl radical such as alkyl, alkenyl, aryl, alkylaryl, or arylalkyl radical containing from 1 to 20 carbon atoms or two carbon atoms are joined together to form a $C_4$-$C_6$ ring;
R' is a $C_1$-$C_4$ substituted or unsubstituted alkylene radical, a dialkyl or diaryl germanium or silicon, or an alkyl or aryl phosphine or amine radical bridging two $(C_5R_x)$ and $(C_5R_m)$ rings;
Q is a hydrocarbyl radical such as aryl, alkyl, alkenyl, alkylaryl, or aryl alkyl radical having from 1-20 carbon atoms, hydrocarboxy radical having from 1-20 carbon atoms, halogen, hydrogen, $R''CO_2$-and $R''_2N$ wherein R" is a hydrocarbyl group containing 1 to about 20 carbon atoms and can be the same or different from each other;
z is 0 or 1; y is 0, 1 or 2; z is 0 when y is 0; n is 0, 1, 2, 3, or 4 depending upon the valence state of M; and n-y is $\geq 1$.

Illustrative but non-limiting examples of the metallocenes represented by the above formula are dialkyl metallocenes such as bis(cyclopentadienyl)titanium dimethyl, bis(cyclopentadienyl)titanium diphenyl, bis(cyclopentadienyl)zirconium dimethyl, bis(cyclopentadienyl)zirconium diphenyl, bis(cyclopentadienyl)hafnium dimethyl and diphenyl, bis(cyclopentadienyl)titanium di-neopentyl, bis(cyclopentadienyl)zirconium di-neopentyl, bis(cyclopentadienyl)titanium dibenzyl, bis(cyclopentadienyl)zirconium dibenzyl, bis(cyclopentadienyl)vanadium dimethyl; the mono alkyl metallocenes such as bis(cyclopentadienyl)titanium methyl chloride, bis(cyclopentadienyl)titanium ethyl chloride, bis(cyclopentadienyl)titanium phenyl chloride, bis(cyclopentadienyl)zirconium methyl chloride, bis(cyclopentadienyl)zirconium ethyl chloride, bis(cyclopentadienyl)zirconium phenyl chloride, bis(cyclopentadienyl)titanium methyl bromide; the trialkyl metallocenes such as cyclopentadienyl titanium trimethyl, cyclopentadienyl zirconium triphenyl, and cyclopentadienyl zirconium trineopentyl, cyclopentadienyl zirconium trimethyl, cyclopentadienyl hafnium triphenyl, cyclopentadienyl hafnium trineopentyl, and cyclopentadienyl hafnium trimethyl; monocyclopentadienyls titanocenes such as, pentamethylcyclopentadienyl titanium trichloride, pentaethylcyclopentadienyl titanium trichloride; bis(pentamethylcyclopentadienyl) titanium diphenyl, the carbene represented by the formula bis(cyclopentadienyl)titanium=CH2 and derivatives of this reagent; substituted bis(cyclopentadienyl)titanium (IV) compounds such as: bis(indenyl)titanium diphenyl or dichloride, bis(methylcyclopentadienyl)titanium diphenyl or dihalides; dialkyl, trialkyl, tetra-alkyl and penta-alkyl cyclopentadienyl titanium compounds such as bis(1,2-dimethylcyclopentadienyl)titanium diphenyl or dichloride, bis(1,2-diethylcyclopentadienyl)titanium diphenyl or dichloride; silicon, phosphine, amine or carbon bridged cyclopentadiene complexes, such as dimethyl silyldicyclopentadienyl titanium diphenyl or dichloride, methyl phosphine dicyclopentadienyl titanium diphenyl or dichloride, methylenedicyclopentadienyl titanium diphenyl or dichloride and other dihalide complexes, and the like; as well as bridged metallocene compounds such as isopropyl(cyclopentadienyl)(fluorenyl)zirconium dichloride, isopropyl(cyclopentadienyl) (octahydrofluorenyl)zirconium dichloride diphenylmethylene(cyclopentadienyl)(fluorenyl) zirconium dichloride, diisopropylmethylene (cyclopentadienyl)(fluorenyl)zirconium dichloride, diisobutylmethylene(cyclopentadienyl)(fluorenyl) zirconium dichloride, ditertbutylmethylene (cyclopentadienyl)(fluorenyl)zirconium dichloride, cyclohexylidene(cyclopentadienyl)(fluorenyl)zirconium dichloride, diisopropylmethylene (2,5-dimethylcyclopentadienyl)(fluorenyl)zirconium dichloride, isopropyl(cyclopentadienyl)(fluorenyl) hafnium dichloride, diphenylmethylene (cyclopentadienyl) (fluorenyl)hafnium dichloride, diisopropylmethylene(cyclopentadienyl) (fluorenyl)hafnium dichloride, diisobutylmethylene(cyclopentadienyl) (fluorenyl)hafnium dichloride, ditertbutylmethylene(cyclopentadienyl) (fluorenyl)hafnium dichloride, cyclohexylidene(cyclopentadienyl)(fluorenyl)hafnium dichloride, diisopropylmethylene(2,5-dimethylcyclopentadienyl) (fluorenyl)hafnium dichloride, isopropyl(cyclopentadienyl)(fluorenyl)titanium dichloride, diphenylmethylene(cyclopentadienyl) (fluorenyl)titanium dichloride, diisopropylmethylene(cyclopentadienyl) (fluorenyl)titanium dichloride, diisobutylmethylene(cyclopentadienyl) (fluorenyl)titanium dichloride, ditertbutylmethylene(cyclopentadienyl) (fluorenyl)titanium dichloride, cyclohexylidene(cyclopentadienyl) (fluorenyl)titanium dichloride, diisopropylmethylene(2,5 dimethylcyclopentadienyl fluorenyl)titanium dichloride, racemic-ethylene bis (1-indenyl) zirconium (IV) dichloride, racemic-ethylene bis (4,5,6,7-tetrahydro-1-indenyl)zirconium (IV) dichloride, racemic-dimethylsilyl bis (1-indenyl)zirconium (IV) dichloride, racemic-dimethylsilyl bis (4,5,6,7-tetrahydro-1-indenyl) zirconium (IV) dichloride, racemic-1,1,2,2-tetramethylsilanylene bis (1-indenyl) zirconium (IV) dichloride, racemic-1,1,2,2-tetramethylsilanylene bis (4,5,6,7-tetrahydro-1-indenyl) zirconium (IV), dichloride, ethylidene (1-indenyl tetramethylcyclopentadienyl) zirconium (IV) dlchloride, racemic-dimethylsilyl bis (2-methyl-4-t-butyl-1-cyclopentadienyl) zirconium (IV) dichloride, racemic-ethylene bis (1-indenyl) hafnium (IV) dichloride, racemic-ethylene bis (4,5,6,7-tetrahydro-1-indenyl) hafnium (IV) dichloride, racemic-dimethylsilyl bis (1-indenyl) hafnium (IV) dichloride, racemic-dimethylsilyl bis (4,5,6,7-tetrahydro-1- indenyl) hafnium (IV) dichloride, racemic-1,1,2,2-tetramethylsilanylene bis (1-indenyl) hafnium (IV) dichloride, racemic-1,1,2,2-tetramethylsilanylene bis (4,5,6,7-tetrahydro-1-indenyl) hafnium (IV), dichloride, ethylidene (1-indenyl-2,3,4,5-tetramethyl-1-cyclopentadienyl) hafnium (IV) dichloride, racemic- ethylene bis (1-indenyl) titanium (IV) dichloride, racemic-ethylene bis (4,5,6,7-tetrahydro-1-indenyl) titanium (IV) dichloride, racemic-dimethylsilyl bis (1-indenyl) titanium (IV) dichloride, racemic-dimethylsilyl bis (4,5,6,7-tetrahydro-1-indenyl) titanium (IV) dichloride, racemic-1,1,2,2-tetramethylsilanylene bis (1-indenyl) titanium (IV) dichloride racemic-1,1,2,2-tetramethylsilanylene bis (4,5,6,7-tetrahydro-1-indenyl) titanium (IV) dichloride, and ethylidene (1-indenyl-2,3,4,5-tetramethyl-1-cyclopentadienyl) titanium IV) dichloride.

The reaction products of the metallocene and aluminoxane which are generally solid materials when produced in aliphatic solvents and solutions when produced in aromatic solvents can be recovered by any well known technique. For example, the solid material can be recovered from the liquid by vacuum filtration or decantation. The oils can be recovered by decantation, and when dried, become glassy solids. The recovered material is thereafter dried under a stream of pure dry nitrogen, dried under vacuum, or by any other convenient manner. The recovered solid is the catalytically active material.

The amount of aluminoxane and metallocene usefully employed in preparation of the catalytically active material, whether the active material is formed in situ as it is being introduced into the gas phase reactor or formed well in advance and introduced as such while in liquid form, can vary over a wide range. The mole ratio of aluminum atoms contained in the aluminoxane to metal atoms contained in the metallocene is generally in the range of from about 2:1 to about 100,000:1, preferably in the range of from about 10:1 to about 10,000:1, and more preferably in the range of from about 50:1 to about 2,000:1.

A metallocene is typically converted to an active catalyst with an ionizing agent (also known as a catalyst activator) such as the aluminoxanes discussed above. Such an ionizing agent reacts with the neutral metallocene to form a cationic metallocene which functions as the active catalyst. The ionizing agent can be a co-catalyst compound such as the aluminoxane or it may be an ionizing ionic compound that forms an anion which is chemically unreactive with the cationic metallocene. The anion is not coordinated or is loosely coordinated with the cationic metallocene. The use of such ionizing agents containing unreactive anions are disclosed in, for example, European Patent Application Publication Nos. 0 426 637, 0 426 638, and 0 427 697. Methods for generating cationic metallocenes are also disclosed in the following publications: European Patent Application Publication Nos. 0 277 003 and 0 277 004; "Ethylene Polymerization by a Cationic Dicyclopentadienylzirconium(IV) Alkyl Complex," R. F. Jordan, C. S. Bajgur, R. Willett, B. Scott, J. Am. Chem. Soc., p. 7410-7411, Vol. 108 (1986); "Synthesis and Insertion Reactions of Cationic Alkylbis(cyclopentadienyl)titanium Complexes," M. Bochmann, L. M. Wilson, J. Chem. Soc. Commun., p. 1610-1611 (1986); "Insertion Reactions of Nitriles in Cationic Alkylbis(cyclopentadienyl)titanium Complexes, M. Bochmann, L. Wilson, Organometallics, p. 1147-1154, Vol 7 (1987); and "Multiple Metal- Carbon Bonds," R. R. Schrock, P. P. Sharp, J. Am. Chem. Soc. p. 2389-2399, Vol 100 (1978).

The ionizing ionic agent is typically mixed with an equimolar quantity of the neutral derivative of the metallocene producing the following reaction:

$$(C_5R_x)_yR'_z(C_5R_m)MR''_2 + [C][A] \rightarrow [(C_5R_x)_yR'_z(C_5R_m)MR'']^+[A]^- + R''[C]$$

wherein:

[C] is a carbonium, oxonium, or sulfonium cation
[A] is an anion is not coordinated or is only loosely coordinated with the cationic metallocene and is chemically unreactive with the cationic metallocene
R and R" are the same or different and is hydrogen or a hydrocarbyl radical such as alkyl, alkenyl, aryl, alkylaryl, or arylalkyl radical containing from 1 to 20 carbon atoms or two carbon atoms joined together to form a $C_4$-$C_6$ ring;
M is a metal of from Groups IIIB to VIII of the Periodic Table of the Elements;
$(C_5R_x)$ and $(C_5R_m)$ are the same or different cyclopentadienyl or substituted cyclopentadienyl groups bonded to M;
R' is a $C_1$-$C_4$ substituted or unsubstituted alkylene radical, a dialkyl or diary] germanium or silicon, or an alkyl or aryl phosphine or amine radical bridging two $(C_5R_x)$ and $(C_5R_m)$ rings;
z is 0 or 1; y is 0, 1 or 2; and z is 0 when y is 0;

Ionizing ionic compounds containing a carbonium, oxonium, or sulfonium cation are applicable. Triphenylmethyltetrakis(pentafluorophenyl)borate is preferred.

A catalyst system that does not require an aluminoxane includes metallocene complexes with one or more dinegative ligands substituted for the uninegative cyclopentadienyl ligands. The use of such compounds is disclosed in commonly assigned U.S. Patent Application Serial No. 814,809, filed December 31, 1991 and U.S. Patent Application Serial No. 814,810, filed December 31, 1991. Examples of such polyolefin catalysts include: $[C_5(CH_3)_5][C_2B_9H_{11}]ZrCH_3$ and $[[C_5(CH_3)_5][C_2B_9H_{11}]Zr]_2$-m-$CH_2$.

As discussed, the present invention is advantageous when utilizing two or more metallocene compounds. U.S. Patent No. 4,530,914 discloses the use of mixtures of at least two different metallocene compounds to control the molecular weight distribution. Mono or biscyclopentadienyl transition metal compound catalysts being homogeneous, produce polyolefins with narrow molecular weight distribution and narrow compositional distribution. Changes in the ligand substituents or metal component of the mono or biscyclopentadienyl transition metal compound are known to affect polymerization propagation and termination rate constants which in turn affect molecular weight and comonomer distribution of the resulting polyolefin product. The proper choice of a mixture of different mono or biscyclopentadienyl transition metal compound permits the control of molecular weight distribution and compositional distribution directly in the polymerization process without requiring energy intensive blending techniques following the polymerization.

A most preferred catalyst of the invention is generated by reacting a catalyst precursor of either Formula I or Formula II as set forth below with a co-catalyst, such as MAO or MMAO.

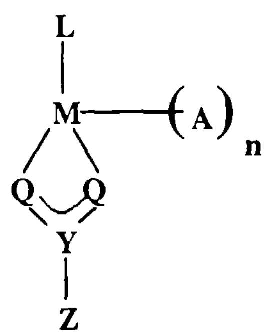

**Formula I**

wherein:

M is a transition metal, preferably Zr or Hf;
L is a substituted or unsubstituted, $^{1}$-bonded ligand coordinated to M, preferably a substituted cyclopentadienyl ligand;
Q can be the same or different and is independently selected from the group consisting of -O-, -NR-, $-CR_2-$ and -S-, preferably oxygen;
Y is either C or S, preferably carbon;
Z is selected from the group consisting of -OR, $-NR_2$, $-CR_3$, -SR, $-SiR_3$, $-PR_2$ and -H, with the proviso that when Q

is -NR-then Z is selected from the group consisting of -OR, $-NR_2$, -SR, $-SiR_3$, - $PR_2$ and -H, preferably Z is selected from the group consisting of -OR, - $CR_3$ and $-NR_2$;
n is 1 or 2;
A is a univalent anionic group when n is 2 or A is a divalent anionic group when n is 1, preferably W is a carbamate, carboxylate or other heteroallyl moiety described by X, Y and Z combination and
R can be the same or different and is independently a group containing carbon, silicon, nitrogen, oxygen, and/or phosphorus where one or more R groups may be attached to the L substituent, preferably R is a hydrocarbon group containing from 1 to 20 carbon atoms, most preferably an alkyl, cycloalkyl or an aryl group and one or more may be attached to the L substituent.

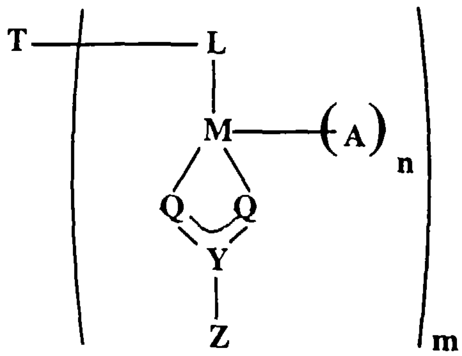

**Formula II**

wherein:
M is a transition metal, preferably Zr or Hf;
L is a substituted or unsubstituted, [1]-bonded ligand coordinated to M, preferably a substituted cyclopentadienyl ligand;
Q can be the same or different and is independently selected from the group consisting of -O-, -NR-, $-CR_2$- and -S-, preferably oxygen;
Y is either C or S, preferably carbon;
Z is selected from the group consisting of -OR, $-NR_2$, - $CR_3$, -SR, $-SiR_3$, $-PR_2$ and -H, with the proviso that when Q is -NR-then Z is selected from the group consisting of -OR, $-NR_2$, -SR, $-SiR_3$, - $PR_2$ and -H, preferably Z is selected from the group consisting of -OR, - $CR_3$ and $-NR_2$;
n is 1 or 2;
A is a univalent anionic group when n is 2 or A is a divalent anionic group when n is 1, preferably is a carbamate, carboxylate or other heteroallyl moiety described by Q, Y and Z combination;
R can be the same or different and is independently a group containing carbon, silicon, nitrogen, oxygen, and/or phosphorus where one or more R groups may be attached to the L substituent, preferably R is a hydrocarbon group containing from 1 to 20 carbon atoms, most preferably an alkyl, cycloalkyl or an aryl group and one or more may be attached to the L substituent;
T is a bridging group connecting selected from the group consisting of an alkylene or arylene group containing from 1 to 10 carbon atoms optionally substituted with carbon or heteroatoms, germaniun, silicone and alkyl phosphine; and
m is 1 to 7, preferably 2 to 6, most preferably 2 or 3.

The supportive substituent formed by Q, Y and Z is a unicharged polydentate ligand exerting electronic effects due to its high polarizibility, similar to the Cp' group. In the most preferred embodiments of this invention, the disubstituted carbamates,

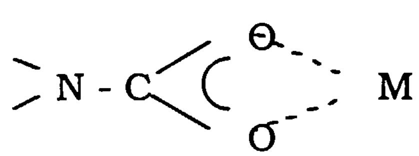

and the carboxylates

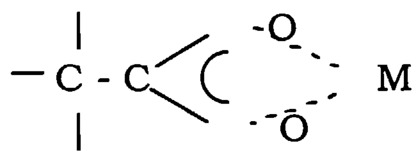

are employed. A particularly preferred embodiment of the invention is the indenyl zirconium tris(diethylcarbamate).

The catalyst precursor of the present invention may be made using any conventional process; the method of manufacture not being critical. In a preferred method of manufacturing this catalyst, a source of cyclopentadienyl-type ligand is reacted with a metal compound of the formula $M(NR_2)_4$ in which M and R are defined above to introduce the cyclopentadienyl-type ligand onto the metal compound. The resulting product is then dissolved in an inert solvent, such as toluene, and the heterocummulene such as in this instance $CO_2$, is contacted with the dissolved product to insert into one or more $M\text{-}NR_2$ bonds to form, in this instance, a carbamate. These precursors are then reacted with an activator, such as aluminoxane, to form the active catalyst.

Examples of other catalyst precursors include indenyl zirconium tris(pivalate) or indenyl zirconium tris(p-toluate) zirconium tris(pivalate), indenyl zirconium tris(p-toluate), indenyl zirconium tris(benzoate), (1-methylindenyl)zirconium tris(pivalate), (2-methylindenyl) zirconium tris(diethylcarbamate), (methylcyclopentadienyl) zirconium tris(pivalate), cyclopentadienyl tris(pivalate), (pentamethylcyclopentadienyl) zirconium tris(benzoate). As mentioned previously, the catalyst can be supported, sprayed dried, or in liquid form. In a particularly preferred embodiment, the catalyst is sprayed or used in liquid form as in a solution or slurry.

As noted above, these catalyst precursors are used in conjunction with activating co-catalysts to form catalyst compositions for the production of polyethylenes.

The activating co-catalyst is capable of activating the metallocene catalyst. Preferably, the activating co-catalyst is one of the following: (a) branched or cyclic oligomeric poly(hydrocarbylaluminum oxide)s which contain repeating units of the general formula $-(Al(R^*)O)-$, where $R^*$ is hydrogen, an alkyl radical containing from 1 to about 12 carbon atoms, or an aryl radical such as a substituted or unsubstituted phenyl or naphthyl group; (b) ionic salts of the general formula $[A^+][BR^{**}_4{}^-]$, where $A^+$ is a cationic Lewis or Bronsted acid capable of abstracting an alkyl, halogen, or hydrogen from the metallocene catalysts, B is boron, and $R^{**}$ is a substituted aromatic hydrocarbon, preferably a perfluorophenyl radical; and (c) boron alkyls of the general formula $BR^{**}_3$, where $R^{**}$ is as defined above.

Preferably, the activating co-catalyst for use with the metallocenes of Formulae I and II is a branched or cyclic oligomeric poly(hydrocarbylaluminum oxide). More preferably, the activating co-catalyst is an aluminoxane such as methylaluminoxane (MAO) or isobutyl modified methylaluminoxane (MMAO).

As stated previously aluminoxanes are well known in the art and comprise oligomeric linear alkyl aluminoxanes represented by the formula:

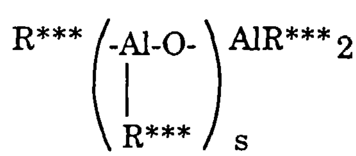

and oligomeric cyclic alkyl aluminoxanes of the formula:

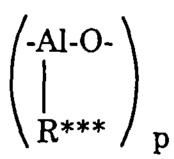

wherein s is 1-40, preferably 10-20; p is 3-40, preferably 3-20; and $R^{***}$ is an alkyl group containing 1 to 12 carbon atoms, preferably methyl or an isobutyl radical such as a substituted or unsubstituted or radical.

The catalyst composition may optionally contain one or more non-metallocene catalysts. These non-metallocene

catalysts include for example any Ziegler-Natta catalysts containing a metal from groups IV(B), V(B), or VI(B) of the Periodic Table. Suitable activators for Ziegler-Natta catalysts are well known in the art and may also be included in the catalyst composition.

Hydrocarbon Interlinking Compound

A hydrocarbon interlinking compound is employed in the process to increase or enhance long chain branching and/or chain entanglement. The hydrocarbon interlinking compound can have two or more carbon-carbon double bonds, or be ring-strained and have at least one double bond to effect long chain branching and/or chain entanglement during polymerization. Suitable hydrocarbon interlinking compounds can include a polyene such as a diene, conjugated or non-conjugated, a triene, naphthenics (e.g., cyclopentadiene, cyclohexene, and cyclo-octene), and mixtures thereof.

The hydrocarbon interlinking compound is an aliphatic, cyclic, or aliphatic and cyclic hydrocarbon containing at least 6 or 7 carbon atoms and at least two non-conjugated, carbon-carbon double bonds. When the hydrocarbon interlinking compound contains more than two double bonds, it is preferred that such additional double bonds be non-reactive by virtue of being in a stable ring structure or because of their being sterically hindered, Each of the two non-conjugated, carbon-carbon double bonds is independently: 1) a vinylic double bond, or 2) the sole carbon-carbon double bond in a ring containing five or fewer carbon atoms.

Both of the two non-conjugated, carbon-carbon double bonds of the hydrocarbon interlinking compound are Ziegler-Natta reactive; that is, both non-conjugated, carbon-carbon double bonds react with and insert into growing polyolefin chains in the presence of the catalyst composition during polymerization. Moreover, the two non-conjugated, carbon-carbon double bonds of the hydrocarbon interlinking compound have substantially equal Ziegler-Natta reactivity, i.e., substantially equal tendency to be inserted into a growing polyolefin chain, in the presence of the catalyst composition under polymerization conditions.

The requirement of the present invention that two of the carbon-carbon double bonds of the hydrocarbon interlinking compound be reactive or exhibit an equal or substantially equal tendency to be inserted into a growing polymer chain is neither necessary, desired, nor disclosed in processes in the art in which compounds such as dienes are employed as comonomers. Indeed, in the present invention, it has been discovered that the reactivity of a compound such as a diene toward copolymerization can be varied widely. For example, the diene ethylidene norbornene (ENB), used extensively in the preparation of EPDM rubbers, has a very reactive, ring-strained double bond and an unreactive double bond. Butadiene (BD) and divinylbenzene (DVB) likewise exhibit reactivity behaviors similar to ENB. In contrast as can be seen from the structure below, the hydrocarbon interlinking compounds of the present invention such as norbornadiene (NBD) and 1,7-octadiene (OCTN) have essentially identically reactive double bonds, while vinylnorbornene (VNB) has two double bonds of different reactivity.

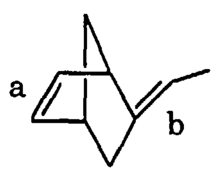
ENB

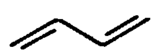
BD

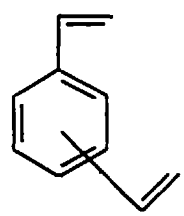
DVB

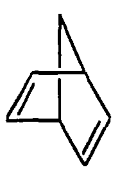
NBD

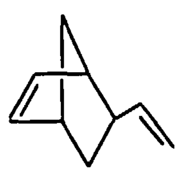
VNB

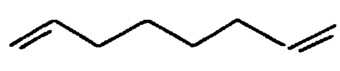
OCTDN

The hydrocarbon interlinking compound of the invention may, for example, be a non-conjugated, linear diene containing only two vinylic, carbon-carbon double bonds, both of which are Ziegler-Natta reactive. Alternatively, the hydrocarbon interlinking compound of the invention may contain, in addition to the two non-conjugated, carbon-carbon double bonds reactive, one or more further double bonds that are generally unreactive in the present process, i.e., double bonds of an aromatic or cis/trans internal —C=C-.

One or more than one hydrocarbon interlinking compound may be used in the process. Examples of useful hydrocarbon interlinking compounds include 1,4-hexadiene, 1,5-hexadiene, 1,6-heptadiene, 1,6-octadiene, norbornadiene (NBD), 1,6 octadiene, 1,7-octadiene (OCTDN), 1,8-nonadiene, 1,9-decadiene, 1,11-dodecadiene, vinylnorbornene such as 5-vinyl-2-norbornene (VNB), 5-(2-propenyl)-2-norbornene, dicyclopentadiene, trivinylbenzene, 1,4,4a,5,8,8a-hexahydro-1,4,5,8-dimethanonaphthalene; branched chain acyclic dienes such as 5-methyl-1,4-hexadiene; single ring alicyclic dienes such as 1,3-cyclopentadiene, 1,4-cyclohexadiene, 1,5-cycloctadiene and 1,5-cyclododecadiene; and multi-ring alicyclic fused and bridged ring dienes such as dicyclopentadiene, bicyclo-(2,2,1)-hepta-2,5-diene, alkenyl, alkylidene, cycloalkenyl and cycloalkylidene norbornenes such as 5-methylene-2-norbornene, 5-vinyl-2-norbornene, 5-(4-cyclopentenyl)-2-norbornene, 5-cyclohexytidene-2-norbornene, and norbornadiene.

Preferably, the hydrocarbon interlinking compound is selected from 1,6-octadiene, 1,11-dodecadiene, 1,9-decadiene, 1,7-octadiene, norbornadiene, vinylnorbornene such as 5-vinyl-2-norbornene, 5-(2-propenyl)-2-norbornene, dicyclopentadiene, and mixtures thereof.

Most preferably, the hydrocarbon interlinking compound is norbornadiene (NBD), 1,7-octadiene, vinylnorbornene, or mixtures thereof. It is preferred that when a diene is used as the hydrocarbon interlinking compound it is not also employed as a comonomer in the polymerization.

The amount of hydrocarbon interlinking compound used in the gas phase process preferably varies from about 0.001 to about 5 weight percent based upon the total monomer feed to the process, i.e., total ethylene and optional alpha olefin employed. Preferably, about 0.05 to about 4 weight percent of the total monomer feed is hydrocarbon interlinking compound. Most preferably, about 0.1 to about 3.5 weight percent of the total monomer feed is hydrocarbon interlinking compound. In slurry polymerization processes the amount of hydrocarbon interlinking compound can be employed in somewhat greater concentration, for example, in an amount ranging from about 0.001 to about 10 weight percent based upon the total monomer feed, preferably about 0.1 to about 7.5, and most preferably about 0.5 to about 6 weight percent.

In an especially preferred embodiment, the unreacted hydrocarbon interlinking compound is removed from the polymer product by purging the system with an inert gas (e.g. nitrogen), or by purging with an inert gas and water vapor or oxygen, or by heating under vacuum using techniques well known to those skilled in the art.

Polymerization

Polymerization employing the catalyst and hydrocarbon interlinking compound described herein may be conducted in the gas phase in a stirred or fluidized bed reactor, or in a slurry phase reactor using equipment and procedures well known in the art. Preferably the polymerization is conducted in the gas phase as disclosed in U.S. Patent No. 4,588,790; 4,988,783; 4,994,534; 5,317,036; 5,453,471 and 5,462,999. Most preferably, the polymerization of the invention is conducted in a condensing mode as disclosed in U.S. Patent Nos. 4,528,790 and/or 5,462,999. Ethylene, higher alpha-olefin(s), optionally other monomers, and the hydrocarbon interlinking compound are contacted with an effective amount of the metallocene catalyst at a temperature and a pressure sufficient to initiate polymerization. The process may be carried out in a single reactor or in two or more multiple reactors in series (or staged). The process is conducted substantially in the absence of catalyst poisons such as moisture, oxygen, carbon dioxide, and acetylene, since only minor amounts (i.e. $\leq 2$ ppm) of such materials have been found to affect the polymerization adversely. The polymerization of the present invention can be additionally conducted in the presence of inert particulate material as described in U.S. Patent No. 4,994,534.

When hydrogen is used as a chain transfer agent in the process, it is used in amounts varying between about 0.001 to about 10 moles of hydrogen per mole of total monomer feed. Also, as desired for temperature control of the system, any gas inert to the catalyst composition and reactants can also be present in the gas stream.

Organometallic compounds may be employed as scavenging agents for poisons to increase the catalyst activity. Examples of these compounds are metal alkyls, preferably aluminum alkyls, most preferably triisobutylaluminum. Use of such scavenging agents is well known in the art.

Polymers Produced

Polyolefins that can be produced in accordance with the present invention are polymers of ethylene, the hydrocarbon intrlinking compound, and optionally a higher alpha-olefins containing 3 to about 12 carbon atoms such as propylene, 1-butene, 1-pentene, 1-hexene, 4-methyl-1-pentene, and 1-octene, with densities ranging from about 0.86 to about 0.96 g/cc, preferably from about 0.89 to about 0.94 g/cc. Of these, ethylene-hydrocarbon interlinking compound-hexene-1, ethylene-hydrocarbon interlinking compound-butene-1, and ethylene-hydrocarbon interlinking compound-propylene are preferred. Optionally the ethylene-hydrocarbon interlinking compound-propylene composition can additionally contain a diene such as ENB and inert particulate material such as carbon black and/or silica.

When produced as described in the invention, the processability of the polyolefin is appreciably enhanced by the presence of long-chain branches which branches approximate in length the backbone of the polymer molecule. In addition to LCBs, these substantially non-linear polymers can have short-chain branches (SCB) which are produced from added comonomer such as hexene-1 or butene-1. Most preferably, the final polymer is a LDPE (density 0.91-0.93 g/cc) having at least 0.3 to 4 LCB's per 1000 $CH_2$ units and which approximates a dendridic configuration in structure. The polymers so produced can be stabilized post reaction using conventionally available stabilizers such as Irganox® 1035. Molecular weight of the polymers can be controlled by the use of a chain transfer agent such as hydrogen. These polymers have utility in films and molded plastic products among other uses. The ethylene-hydrocarbon interlinking compound and ethylene-hydrocarbon interlinking compound-hexene produce clear, transparent, essentially gel-free films.

All patents cited herein are hereby incorporated by reference.

The following examples further illustrate the invention. All parts and percentages are by weight unless otherwise specified.

EXAMPLES

Glossary:

Density in g/cc is determined in accordance with ASTM 1505, based on ASTM D-1928, procedure C, plaque preparation. A plaque is made and conditioned for one hour at 100°C to approach equilibrium crystallinity, measurement for density is then made in a density gradient column.

MAO is a solution of methyl aluminoxane in toluene, approximately 1.8 molar in aluminum, obtained from Ethyl Corporation (Baton Rouge, LA).

MMAO in isopentane is a solution of modified methyl aluminoxane containing isobutyl groups in isopentane, obtained from Akzo Nobel (Chicago, Illinois).

TMA is trimethylaluminum.

TEAL is triethylaluminum.

TIBA is triisobutylaluminum.

TNBAL is tri(n-butyl) aluminum.

MFR stands for melt flow ratio, which is the ratio of flow index to melt index. It is related to the molecular weight distribution of the polymer.

MI stands for melt index, reported as grams per 10 minutes, determined in accordance with ASTM D-1238, condition E, at 190°C. FI stands for flow index, reported as grams per 10 minutes, is determined in accordance with ASTM D-1238, condition F, and is measured at ten times the weight used in the melt index text.

Procedures:

SEC-Viscometry for Long-Chain Branching Measurement

Polyethylene chains with long-chain branches show less-extended spatial conformational arrangements in a dilute solution than linear polyethylene chains of the same molar mass. Thus, the former have lower limiting viscosity numbers than the latter, due to their reduced hydrodynamic size. Theoretical relationships which permit calculation of long chain branching statistics from the ratio of limiting viscosity number of a branched polymer to that of its linear counterpart have been developed. See, for example, the article entitled "Determination of Long-Chain Branching Distributions of Polyethylenes," by Mirabella, F. M., Jr.; and Wild, L., in *Polymer Characterization, Amer. Chem. Soc. Symp. Ser.* 227, 190, p. 23. Thus, measuring the limiting viscosity of polyethylene containing long chain branches as a function of molecular weight and comparing the results to the corresponding data measured for the same quantity of a linear polyethylene provides an estimate of the number of long chain branches in the branched polyethylene.

Determination of Molecular Weights, Molecular Weight Distribution, and Long Chain Branching

A Waters 150-C liquid chromatograph equipped with gel permeation chromatograhic (GPC) columns for molecular weight measurements and a Viscotek 150R viscometer for viscosity measurements are employed. The gel permeation chromatograph provides the molecular weight distributions of the polyethylene samples, while the viscometer, along with the GPC infrared detector, measures the concentrations and determined viscosities. For the size exclusion chromatography (SEC), a 25 cm long preliminary column from Polymer Labs having a 50 Å nominal pore size, followed by a 25 cm long Shodex A-80 M/S (Showa) column with 80 Å nominal pore size, followed by a 25 cm long Shodex A-80 M/S (Showa) column with 80 Å nominal pore size are used. Both columns are of a styrene-divinyl benzene-like material. 1,2,4,-trichlorobenzene is used as the solvent and the chromatographic elutent. All measurements are made at a temperature of 140 ± 0.5°C. A detailed discussion of the methodology of the SEC-Viscometry technique and the equations used to convert GPC and viscometry data into long-chain branching and corrected molecular weights is given in the article by Mirabella and Wild referred to above.

Differential Scanning Colorimeter and Heat of Fusion

DSC thermogram is acquired by measuring the differential heat flow between sample and reference both placed in crimped aluminum pans using an increasing temperature ramp using a IA-2910 DSC controller and A21W data station.

Determination of Al, Zr and Si in Polyethylene

Polyethylene samples are weighed into platinum crucibles, ignited, then placed in a muffle furnace (580°C) until all the carbon has burned off. After cooling hydrochloric acid is added to the residue and it is heated gently to aid dissolution. The crucibles are cooled, and hydrofluoric acid is added to insure total dissolution of the silicane. The samples are then quantitatively transferred and diluted to 15 ml with deionized water and analyzed using an Inductively-Coupled Plasma (Atom Scan 25, Thermo Jarrell Ash).

Ethylene Copolymer Composition Distribution Analysis by Temperature Rising Elution Fractionation

Temperature Rising Elution Fractionation or TREF has been established as a primary method for measuring composition (or short-chain branch) distribution for ethylene/alpha-olefin copolymers. A dilute copolymer solution in a solvent such as 1,2,4-trichlorobenzene, at 0.1-0.5% w/v, is loaded at high temperature onto a packed column. The column is then allowed to cool down to ambient temperature in a controlled manner so that the polymer is crystallized onto the packing in the order of increasing branching (or decreasing crystallinity) with the decreasing temperature. The column is then heated in a controlled manner to above 140°C with a constant solvent flow through the column. The polymer fractions as they are eluted have decreasing branching (or increasing crystallinity) with the increasing temperature. A concentration detector is used to monitor effluent concentrations. Profiling the concentration of the polymer as a function of elution temperature yields a so-called TREF thermogram.

Reference: Wild, L. et al., *J. Polym. Sci., Polym. Phys. Ed.*, 20, p. 441 (1982).

Branching by Carbon-13 NMR

An 8% weight/volume concentration is prepared by dissolving the polyolefin in ortho dichlorobenzene (ODCB) in an NMR tube. A closed capillary tube of deuterium oxide is inserted into the NMR tube as a field frequency lock. Data is collected on the Bruker AC 300 at 115°C using NOE enhanced conditions with a 30° PW and a 5 second repetition time. The number of carbon scans usually varies from 1,000 to 10,000 with the more highly branched samples requiring shorter acquisitions. The area of each of the peaks is measured along with the area of the total aliphatic region. The areas of the carbons contributed by the comonomer are averaged and rationed to the area of the backbone to give the mole fraction. This number is then converted into branch frequency.

Method for the Determination of Unsaturation in Polyethylene by IR

The CH out-of-plane band of unsaturated group is sensitive to the nature of substitution on the double bond. It is, therefore, possible to distinguish between three different types of unsaturation: vinyl (910 $cm^{-1}$), vinylidene (890 $cm^{-1}$) and *trans*-vinylene (965 $cm^{-1}$) absorptions; however, *cis*-vinylene is not measurable due to interference of the $CH_2$ wagging vibrations at 720 $cm^{-1}$. The total degree of unsaturation is determined by summing all the three above.

The procedure makes use of the following equation for branching frequency per 1,000 $CH_2$ groups (BF):

$$BF = [A/te] * [14.0 / 2.54 \times 10^{-3}]$$

where

A is the peak height in absorbance units, t is thickness in mils, e is extinction coefficient in liter/cm * mol. The values of the extinction coefficients were taken from the work of Anderson and Seyfreid (1). Bromination procedure (2) is used to eliminate interference from butyl branches. This involved using the brominated films as references.

References:


1. J. A. Anderson and W. D. Seyfreid, *Anal. Chem.* 20, 998 (1948).
2. D. R. Rueda, F. J. Balta-Calleeja, and A. Hidalgo, *Spectrochim. Acta* 30A, 1545 (1974).

Catalyst Preparation

$BIEZr(Oipr)_3$ Catalyst

1,2-Bis(indenyl)ethane (BIE) was dissolved in toluene containing an equimolar amount of zirconium tetrakis(isopropoxide). An aliquot of this was added to MMAO in heptane such that the Al/Zr ratio of the resulting mixture was 1000 (mole).

$BIEZr(O_2CNEt_2)_3$ Catalyst

1,2-Bis(indenyl)ethane (BIE) was reacted at 125_/2 hr. with an equimolar amount of zirconium tetrakis(diethylamide) and the resulting diethylamine pumped off. The residue was dissolved in toluene and gaseous carbon dioxide added at 0_ and atmospheric pressure ($3CO_2/Zr$). An aliquot of this solution was added to MMAO in heptane such that the Al/Zr ratio of the resulting mixture was 1000 (mole).

Indenyl Zirconium Tris(diethyl-carbamate) [$\eta^5$-IndZr $(O_2CNEt_2)_3$] Catalyst

Zirconium tetrakis(diethylamide) was reacted at 120_/atmospheric pressure under nitrogen with 150% excess of indene for 2 hr. while distilling off the diethylamide (1 mole $Et_2NH/Zr$ evolved). This yielded the $\eta^5$-indenyl zirconium tris(diethylamide) quantitatively. This was diluted to a 5 wt. % concentration solution with dry toluene and this contacted with carbon dioxide (0_/atmospheric pressure). About 3 mole carbon dioxide were absorbed per mole of the zirconium compound. An aliquot of this was reacted with MMAO such that the final mixture had an Al/Zr of 1000 (mole).

$BIEZr(O_2CC_6H_5)_3$ Catalyst

Bis(indenyl)ethane and zirconium tetrakis(diethyl)amide were reacted as above to produce the BIEZr(NEt2)3. Tins was dissolved in toluene to form a dilute solution and three moles benzoic acid/mole BIEZr(NEt2)3 added, also as a dilute solution at -78_, slowly. The resulting solution of the tris(benzoate) was reacted with MMAO, Al/Zr 1000 (mole), to form the active catalyst.

Dienes Used

OCTDN - 1,7-octadiene
VNB - 5-vinyl-1-norbornene
NBD - norbornadiene

Product Stability of Diene Terpolymers

The melt indexer was used to test for post-reaction stability of the polymer product(s). The normal procedure is to heat the polymer in the instrument for 5 min. prior to 1P or 10P extrusion. In order to test for melt stability the polymer was preheated for 5 and 15 min. prior to 1P extrusion:

| Melt Index (1P) | |
|---|---|
| Preheat Time | |
| 5 min. | 15 min. |
| 6.61 | 6.64 |
| 4.27 | 4.01 |
| 3.42 | 3.55 |
| 2.60 | 2.70 |
| 0.99 | 1.17 |

With the exception of the last run, the MI's were all within the "noise level" of data. Serious gelation-cross-linking should have decreased the MI substantially on prolonged preheating.

Extractions

This was a procedure similar to ASTM-D-2765-84. A small bag of 120 mesh SS screen was made and a carefully weighed amount of polymer placed into this bag. Accurate weights of the empty and full bag were determined. This was now hung into a solution of 1500 ml. xylenes and 5 g. BHT and extracted at reflux (~135_) for 4 hr. The bag was dried (110_/overnight in an air oven) and reweighed. For non-diene containing polymers, the loss in weight is 99.9-100.1%.

Polymerizations in the Stirred Slurry Reactor (Runs A to N)

These polymerizations were carried out in a 1.8 l. stirred reactor using the following procedure. After baking out at ~100_ under flowing $N_2$, the reactor was cooled (under $N_2$ flow). One l. of hexanes, 100 ml. of hexene-1 ($CaH_2$ distilled), a stated amount of diene, and 1.14 ml. TIBA (1.0 mmole Al) were added and the reactor closed. The temperature was adjusted to 85_, the stated amount of hydrogen added (0-1000 ml. STP) and the reactor pressured to 200 psi with ethylene (approximately 1.8 mole). Then the catalyst solution was injected via a pressure syringe which initiated the polymerization reaction. The reaction time was normally 30 min., although with very active catalysts only 10 min. were used. The reaction was terminated by injection of 1 ml. isopropanol at the reaction conditions. After cooling and venting, 0.2 g. Irganox-1035 in acetone was added as stabilizer. The polymer slurry was dried in air and stored in polyethylene bags.

Polymerizations in the Mechanically Agitated Gas-Phase Reactor (Runs O to T)

On the evening before each reaction, a 3-lb-prebed was charged to the reactor and then pressure-purged with nitrogen three times to 100 psig. Jacket temperature was adjusted to hold the material at approximately 80_C overnight while under a 3-4 lb/hr nitrogen flow purge at 100 psig reactor pressure. Prior to the run each morning, the reactor was pressure purged once to 300 psi and the 50 ml of cocatalyst solution were then charged to further passivate the reactor. The reactor was then pressure purged 4 more times to 100 psig. Raw materials were charged to establish the initial gas phase concentrations of ethylene, hexene-1, and nitrogen; gas-phase concentrations were normally held near these initial values throughout the batch.

Catalyst slurry or solution was fed to the reactor for the first 2.5 hr. continuously (0.3-0.5 mmole Zr) using aluminum alkyl cocatalyst solution as a carrier and nitrogen as a dispersant.

Monomers and hydrogen were fed continuously as required to maintain gas phase composition throughout the batch. A small vent stream was used to prevent accumulation of the nitrogen that was added with the catalyst. The reactor was operated in batch mode, whereby the batch was terminated when the bed weight approached 25-30 lbs. At batch termination, the feeds were shut off and the reactor was rapidly vented to atmospheric pressure. The reactor was then pressure purged five times to 100 psi with dry nitrogen. The resin was then discharged and exposed to the atmosphere. A two-nozzle purging manifold was inserted deep into the resin in order to purge out hydrocarbons and deactivate the catalyst with water-saturated nitrogen overnight at ambient temperature.

Table 1

Results of Terpolymerizations of NBD Hexene-1-Ethylene Using BIE•Zr(Oipr)$_3$/MMAO Catalyst

| Polym. Run. | A | B | C | D | E | F |
|---|---|---|---|---|---|---|
| Catalyst Type | BIEZr(Oipr)$_3$ → | → | → | → | → | |
| Hydrogen Added (ml. STP) | 0 | 150 | 450 | 600 | 800 | 800 |
| Catalyst Amount (mmole) | 0.33 | 0.65 | 0.65 | 0.55 | 0.63 | 0.49 |
| Diene (g) | 0 | 0.81 | 0.80 | 1.25 | 1.29 | 1.77 |
| Polymer Yield (g) | 74.2 | 59.4 | 53.8 | 41.9 | 51.8 | 44.3 |
| Activity | | | | | | |
| (g PE/hr-mmole Zr-100 psi $C_2^=$) | 225,000 | 183,000 | 165,000 | 152,700 | 82,200 | 90,400 |
| Polymer Properties | | | | | | |
| BBF (butyl's/1000 $CH_2$'s) | 17.6 | 16.8 | 16.9 | 18.0 | NA | NA |
| Hexene-1 (wt %) | 9.9 | 9.5 | 9.5 | 10.1 | -- | -- |
| SEC (Shape) | Monomodal | NA | → | → | → | Monomodal |
| $M_n$ | 31.900 | | | -- | | 4680 |
| PDI | 1.9 | | | | -- | 38.3 |
| Recovery (%) | | | | | -- | 92.6 |
| MI | 6.63 | 0.8(MF) | 0.43 | 0.39 | 1.79 | 0.57 |
| MFR | 19.0 | | 95 | 140 | 77.2 | 176.5 |
| TREF (Shape) | NA | Narrow | Bi-modal Broad | Bi-modal Broad | Skewed | |
| LD (≤60_, %) | -- | 15.3 | 16.3 | 24.7 | 18.3 | 31.6 |
| HD (≥90_, %) | -- | 1.1 | 16.6 | 8.7 | 1.4 | 1.1 |
| Extr. (% sol.) | -- | 100.1 | 100.2 | 99.4 | 99.97 | 99.67 |
| Infrared (wt. %)NA | | | | | | |
| Trans. | NA | NA | .004 | .012 | NA | .004 |
| Vinyl -- | -- | .72 | 1.50 | -- | .050 | |
| =$CH_2$ -- | -- | .029 | .031 | -- | .020 | |
| DSC (2nd Heat) | | | | | | |
| Shape | Sharp | F. Broad | NA | F.Sharp | Broad | Broad |
| m. pt. (_) | 110.8 | 109.5 | -- | 108.2 | 107.6 | 105.9 |
| Cryst. (%) | 38.3 | 19.6 | -- | 36.4 | 43.9 | 37.9 |
| LCB (per 1000 C's)) | 0 | 1.4 | 2.0 | 4.7 | 4.6 | 11.8 |
| Intrinsic Viscosity | -- | 1.15 | 0.86 | 0.77 | 0.72 | 0.69 |

Table II

| Results of Terpolymerizations of OCTDN-Hexene-1-Ethylene Using BIE $Zr(O_2CC_6H_5)_3$/MMAO Catalyst | | | | |
|---|---|---|---|---|
| Polym. Run. | G | H | I | J |
| Catalyst (19170-) | 36-1 | → | 36-2 | 36-3 |
| Catalyst Type | $BIEZr(O_2CC_6H_5)_3$ | → | → | → |
| Catalyst Amount (mmole) | 0.72 | 0.81 | 0.67 | 0.69 |
| Diene (g) | 0 | 0.8 | 1.5 | 3.0 |
| Polymer Yield (g) | 82.2 | 91.9 | 81.6 | 69.8 |
| Activity (corr. for [Zr]) (g PE/hr-mm Zr-100 psi $C_2$ | 113,800 | 112,000 | 116,000 | 101,000 |
| Polymer Properties | | | | |
| BBF (butyl's/1000 $CH_2$'s) | 16.7 | 19.2 | 17.7 | 15.2 |
| Hexene-1 (wt %) | 9.4 | 10.7 | 9.6 | 8.6 |
| SEC (Shape) | Single | → | → | → |
| $M_n$ | 28,400 | 28,500 | 29,400 | 29,800 |
| PDI | 2.1 | 2.0 | 2.0 | 2.1 |
| Recovery (%) | | | | |
| MI | 6.61 | 4.27 | 3.42 | 2.60 |
| MFR | 19.9 | 25.4 | 28.0 | 31.3 |
| TREF (Shape) | NA | → | → | → |
| LD (≤60_, %) | | | | |
| HD (≥90_, %) | | | | |
| JWN Extr. (% sol.)(19457-113) | 100 | 100 | 100 | 100 |
| Infrared (wt %) | | | | |
| Trans. | .01 | NA | → | → |
| Vinyl | .077 | | | |
| $=CH_2$ | .015 | | | |
| DSC (2nd Heat) | Single | Single | Single | → |
| Shape | F. Sharp | Sl. Broad | F. Sharp | → |
| m. pt. (_) | 111.6 | 109.8 | 110.4 | 112.0 |
| Cryst. (%) | 38.8 | 41.9 | 40.0 | 42.0 |
| LCB (Branches/1000 C's) | 0 | 0.8 | 0.7 | 1.0 |
| Intrinsic Viscosity | 0.88 | 1.07 | 1.11 | 1.11 |

Table III

| Results of Terpolymerizations of VNB-Hexene-1 and Ethylene Using $BIEZr(O_2CNEt_2)_3$/MMAO Catalyst | | | | |
|---|---|---|---|---|
| Polym. Run. | K[a] | L[a] | M[a,b] | N[a] |
| Catalyst Type | $BIEZr(O_2CNEt_2)_3$ 120 ml $H_2$, No TIBA | → | → | → |
| Catalyst Amt. (mmole) | 0.20 | 0.52 | 1.92 | 1.88 |
| Diene (g) | 0 | 6.5 | 13.0 | 18.4 |
| Polymer Yield (g) | 89.5 | 52.4 | 87.5 | 44.0 |
| Activity (g PE/hr-mmole Zr-100 psi $C_2^=$) | 447,000 | 104,800 | 43,700 | 23,400 |
| Polymer Properties | | | | |
| BBF (butyl's/1000 $CH_2$'s) | 19.0 | 13.4 | 13.5 | 11.0 |
| Hexene-1 (wt %) | 10.6 | 7.4 | 7.3 | 6.0 |
| SEC (Shape) | Mono | Bimodal | Bimodal | Bimodal |
| $M_n$ | 26,100 | 25,400 | 20,000 | 19,000 |
| PDI | 1.9 | 6.90 | 11.2 | 9.33 |
| Recovery (%) | | | | |
| MI | 9.7 | 2.75 | 0.32 | 0.47 |
| MFR | 21.2 | 33.6 | 59.7 | 59.5 |
| TREF (Shape) | Mono | NA | V. Broad | NA |
| LD (≤60_, %) | 15.8 | | 40.3 | |
| HD (≥90_, %) | 2.1 | | 6.2 | |
| JWN Extr. (% sol.) -- | | | | |
| Infrared (wt. %) | | | | |
| Trans. | .003 | .026 | .029 | .037 |
| Vinyl | .068 | 1.36 | 2.05 | 2.19 |
| $=CH_2$ | .015 | .039 | .065 | .048 |
| DSC (2nd Heat) | | | | |
| Shape | Long-Tail | Mono-V. Broad | V. Broad Bimodal | → |
| m. pt. (_) | 111.0 | 100.7 | 89.9/113.1 | 87.7/116.3 |
| Cryst. (%) | 52 | 23.5 | 13.3/5.6 | 11.9/10.6 |
| LCB (per 1000 C's) 0 | | 2.2 | 3.0 | 3.6 |
| Intrinsic Viscosity -- | | 1.05 | 1.07 | 1.02 |

[a]BHT stabilized products:
[b]Sample tested positive for LCB by extensional viscometry

Table IV

Some Fundamental Physical Properties of the Gas-Phase Reactor Products

| Run | | O | P[c] | Q[d] | R | S[a] | T |
|---|---|---|---|---|---|---|---|
| NBD in Hexene-1 in PR-1 Feed (wt. %) | | 0 | 0.8 | 1.6 | 3.2 | 6.4 | 12.8 |
| MI | | 2.96 | 4.04 | 2.71 | 1.29 | 0.31 | 0.47 |
| MFR | | 30.0 | 36.8 | 30.4 | 47.5 | 67.7 | 50.0 |
| Extrudate Appearance | | Rough Semi- | Smooth Smooth | CoarseRough | Very Rough | | |
| TREF | LD (% ≤60_) | 14.7 | 12.2 | 11.8 | 14.3 | 23.8 | 21.8 |
| | HD (% ≥90_) | 10.7 | 14.2 | 11.3 | 11.6 | 12.3 | 14.2 |
| | Lw/Ln | 4.26 | 3.79 | 3.04 | 3.31 | 4.57 | 4.52 |
| | Appearance | Bimodal Broad → | → | → | V. Broad | Bimodal → | |
| SEC | Mw/Mn | 2.88 | 3.10 | 3.02 | 3.42 | 3.05 | 2.73 |
| | MN | 24,200 | 22,600 | 23,800 | 20,000 | 20,500 | 21,000 |
| | Appearance | Symmetric | → | → | → | → | → |
| | Recovery (%)[b] | 96.2 | 97.4 | 97.4 | 94.9 | 93.6 | 87.2 |
| | Intr. Viscosity | 1.20 | 1.22 | 1.25 | 1.18 | 1.02 | 0.87 |
| | LCB/1000 $CH_2$'s | 0.6 | 0.4 | 0.3 | 0.4 | 1.5 | 3.8 |
| Infrared (wt. % C = C) | | | | | | | |
| | Trans | .024 | .024 | .029 | .026 | .032 | .030 |
| | Vinyl | .014 | .012 | .014 | .012 | .024 | .031 |
| | $=CH_2$ | .038 | .033 | .049 | .039 | .047 | .047 |
| | Zr in Polymer (ppm) | 2.6 | 3.8 | 3.8 | 3.0 | 2.9 | 3.0 |

[a]Very low catalyst activity reason unknown.

[b]95± 2% recovery is normal for a gel-free polymer.

[c]BBF - 13.4; 7.6 wt. % hexene incorporated.

[d]BBF - 12.7; 7.2 wt. % hexene incorporated.

Table V

Gas Phase Reactor Polymerization Data Summary

| Run | O | P | Q | R | S | T |
|---|---|---|---|---|---|---|
| NBD in Hexene-1 Feed (wt. %) | 0 | 0.8 | 1.6 | 3.2 | 6.4 | 12.8 |
| Reaction Conditions | | | | | | |
| Pressure (psig) | 350 | → | → | → | → | → |
| Temp. (_C) | 80 | → | → | → | → | → |
| Ratios ($C_6/C_2$) | .022-.029 | .020-.03 | .020-.025 | .025-.03 | .026-.029 | .023-.030 |
| Ethylene Pressure (psig) | 200 | → | → | → | → | → |
| Max. Prod. Rate (lb/hr) | 3.6 | 4.5 | 3.4 | 3.0 | 1.5 | 3.3 |
| Min. Jacket Temp. (_C) | 68 | 67 | 70 | 68 | 79 | 70 |
| Max. Dew Pt. (_C) (BWR Equ.) | 44 | 44 | 40 | 44 | 45 | 45 |
| Catalyst | | | | | | |
| Catalyst Type (19170-95-) | P-24-U H | → E | → F | → G | → G | → I |
| Cat. Feed (mmole) | 350 | 449 | 481 | 404 | 302 | 431 |
| Cat. Feed Time (hr) | 2.0 | 2.5 | 2.5 | 2.0 | 1.5 | 3.0 |
| Cat. Carrier and Cocatalyst | 15% MMAO/$iC_5$ | | → | → | → | → |
| Cocat. Feed Rate (ml/hr) | 150 | → | → | → | → | → |
| Al/Zr Ratio (mole) | 1000 | → | → | → | → | → |
| Feed Mode | | | | | | |
| Pre-Bed† | S | 5 MI LLDPE | P | Q | R | O |
| Pre-Bed Passivation (ml TIBA) | 50 | → | → | → | → | → |
| Product Weight (wt. of pre-bed) (lb) | 27.0 | 23.7 | 24.7 | 27.0 | 20.5 | 26.2 |

† three pounds from the designated run.

## Claims

1. A process for making a polyethylene homopolymer, copolymer or terpolymer having long chain branching comprising providing ethylene and optionally an alpha olefin having 3 to 18 carbon atoms in a reaction zone containing a

metallocene polymerization catalyst under polymerization conditions in the presence of a hydrocarbon interlinking compound in an amount sufficient to provide chain entanglement or long chain branching.

2. A process as claimed in Claim 1 wherein the hydrocarbon interlinking compound is a diene, a triene, a naphthenic compound, or a mixture thereof; and

wherein the catalyst comprises

(i) a catalyst precursor selected from the group consisting of

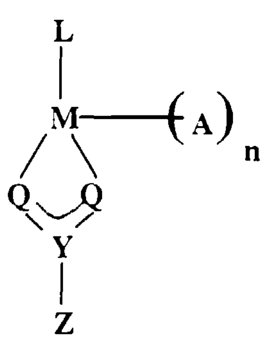

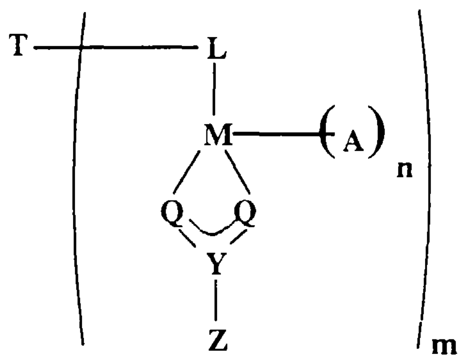

;

and

mixtures thereof

wherein:

M is Zr or Hf:

L is a substituted or unsubstituted, $^{1}$-bonded ligand;

Q can be the same or different and is independently selected from the group consisting of -O-, -NR-, -$CR_2$- and -S-;

Y is either C or S;

Z is selected from the group consisting of -OR, -$NR_2$, -$CR_3$, -SR, -$SiR_3$, -$PR_2$ and -H, with the proviso that when Q is -NR- then Z is selected from the group consisting of -OR, -$NR_2$, -SR, -$SiR_3$, -$PR_2$ and -H;

n is 1 or 2;

A is a univalent anionic group when n is 2 or A is a divalent anionic group when n is 1;

R can be the same or different and is independently a group containing carbon, silicon, nitrogen, oxygen, and/or phosphorus and one or more R groups may optionally be attached to the L substituent;

T is a bridging group selected from the group consisting of an alkylene or arylene group containing from 1 to 10 carbon atoms, germaniun, silicone and alkyl phosphine; and m is 1 to 7; and

(ii) a co-catalyst.

3. A process as claimed in Claim 2 wherein the hydrocarbon interlinking compound is 1,6-heptadiene, 1,7-octadiene, 1,8-nonadiene, 1,9-decadiene, 1,11-dodecadiene, 5-vinyl-2-norbornene, 5-(2-propenyl)-2-norbornene, norbornadiene, dicyclopentadiene, 1,4,4a,5,8,8a-hexahydro-1,4,5,8-dimethanonaphthalene, or a mixture thereof.

4. A process as claimed in Claim 2 wherein Q is oxygen, y is carbon, Z is -OR, -$CR_3$ or -$NR_2$, R is a hydrocarbon group having 1 to 20 carbon atoms, L is a substituted cyclopentadienyl ligand, T is an ethylene group or a silicone group; m is 2 or 3; and wherein the co-catalyst is selected from (a) branched or cyclic oligomeric poly(hydrocarbylaluminum oxide) that contain repeating units of the general formula -(Al(R')O)-, where R' is an alkyl radical containing from 1 to 12 carbon atoms, or an aryl radical such as a substituted or unsubstituted phenyl or naphthyl group and (b) borates.

5. A process as claimed in Claim 4 wherein the catalyst precursor is preactivated with an amine.

6. A process as claimed in any one of the preceding claims wherein the hydrocarbon interlinking compound is employed in a amount in the rage of from 0.001 to 5 weight percent of the total monomer feed.

7. A process as claimed in ay one of the preceding claims wherein the process is conducted in the gas phase ad the catalyst is sprayed dried or in liquid form.

8. A process as claimed in any one of claims 1 to 6 wherein the process is conducted in condensing mode.

9. A film or injection molded article comprising a polyethylene composition produced by a process as claimed in any one of the preceding claims.